Europäisches Patentamt

European Patent Office

Office européen des brevets

(11) Veröffentlichungsnummer: **0 395 854 B1**

(12) **EUROPÄISCHE PATENTSCHRIFT**

(45) Veröffentlichungstag der Patentschrift: **20.07.94**

(51) Int. Cl.5: **G02B 6/42**

(21) Anmeldenummer: **90104304.2**

(22) Anmeldetag: **07.03.90**

(54) **Anordnung zur Ankopplung eines Lichtwellenleiters an ein optisches Sende- oder Empfangselement.**

(30) Priorität: **05.05.89 DE 3914835**

(43) Veröffentlichungstag der Anmeldung:
**07.11.90 Patentblatt 90/45**

(45) Bekanntmachung des Hinweises auf die
Patenterteilung:
**20.07.94 Patentblatt 94/29**

(84) Benannte Vertragsstaaten:
**FR GB IT NL SE**

(56) Entgegenhaltungen:
**WO-A-85/03179**
**DE-A- 3 543 558**
**DE-A- 3 546 082**

**ELECTRONICS LETTERS Bd. 21, Nr. 11, 23.
Mai 1985, STEVENAGE GB Seiten 508 -509,
KOKUBUN et al.: "Silicon optical printed circuit board for threedimensional integrated
optics".**

(73) Patentinhaber: **ANT Nachrichtentechnik GmbH
Gerberstrasse 33
D-71522 Backnang(DE)**

(72) Erfinder: **Kuke, Albrecht, Dr.-Phys.
Nelkenweg 2
D-7150 Auenwald(DE)**
Erfinder: **Spatschek, Thomas, Dipl.-Ing.
Steinbühl 13
D-7173 Mainhardt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft eine Anordnung zur Ankopplung eines Lichtwellenleiters an ein optisches Sende- oder Empfangselement nach dem Oberbegriff des Patentanspruches 1.

In der optischen Nachrichtentechnik müssen Lichtwellenleiter, insbesondere Monomode-Lichtwellenleiter, an optische Sende- und Empfangselemente mit möglichst hohem Koppelwirkungsgrad angekoppelt werden.

Die optischen Sende- und Empfangselemente können Halbleiterlaser, Empfangsdioden oder optoelektronische intergrierte Schaltkreise (OEIC) sein. Eine sehr präzise Fixierung der Sende- und Empfangselemente sowie des Lichtwellenleiters und weiterer optischer Elemente ist notwendig, um eine dämpfungsarme Ankopplung zu erreichen.

Eine bekannte Möglichkeit, Halteelemente mit hoher Präzision herzustellen, besteht in der anisotropen Ätztechnik von Silizium, wie sie aus der DE 32 06 600 A1 hervorgeht.

Aus der DE 35 43 558 A1 ist es bekannt, einen Lichtwellenleiter und einen Fotodetektor über ein optisches Umlenkbauelement miteinander zu koppeln. Der Lichtwellenleiter und der Fotodetektor sind dabei auf einem Trägerelement befestigt. Dieses Trägerelement ist als Halbleiter, z.B. Si-Substrat, ausgebildet, in den grabenförmige Vertiefungen sowie das Umlenkbauelement eingeätzt sind.

Die engen Toleranzen, die jedoch bei der Ankopplung von Lichtwellenleitern an Sende- oder Empfangselement gefordert werden, lassen sich mit der anisotropen Ätztechnik in Silizium nicht oder nur mit erheblichem Aufwand einhalten. Hinzu kommt, daß die Lage der Lichtaustritts- bzw. Lichteintrittszonen des Lasers bzw. des OEIC in Bezug auf dessen äußere Geomtrie nicht mit der erforderlichen Genauigkeit definiert ist. Bei einem Einlegen des aktiven Bausteins, weiterer optischer Elemente und des Lichtwellenleiters in vordefinierte Siliziumhalterungen überschreitet die Summe aller Toleranzen aus der Ätztechnik, den Bausteingeometrien und bei der Montage die genannten Toleranzen wesentlich. Die strengen Toleranzanforderungen werden wesentlich entschärft, wenn zugelassen wird, daß an einer Stelle des Strahlengangs eine Justierung durchgeführt werden kann.

Aus der DE 31 38 197 A1 ist es bekannt, einen Lichtwellenleiter axial und lateral zur optischen Achse zu justieren. Nach diesem Stand der Technik wird eine Justierbewegung durch gegenseitiges Verschieben zweier senkrecht zur optischen Achse stehenden Flanschflächen durchgeführt. Da sich Laser oder OEICs meist auf einem Substrat befinden und seitlich abstrahlen, liegt die optische Achse parallel zu diesem als Montageebene dienenden Substrat oder Gehäuseboden. Die zur lateralen Justierung erforderlichen Flanschflächen müssen daher senkrecht zu dieser Montagegrundfläche stehen. Dies ist mit dem Nachteil verbunden, daß hierbei die Bauhöhe wächst. Bei geringen Flanschhöhen nimmt die Stabilität der Flanschverbindungen ab.

Die Erfindung geht aus von einer Anordnung zur Ankopplung eines Lichtwellenleiters an ein optisches Sende- oder Empfangselement, wie sie in Y. Kokubun et al: "Silicon Optical Printed Circuit Board for Three-Dimensional Intergrated Optics" in Electr. Lettr., Vol. 21, No. 11, S. 508-509 beschrieben ist. Diese Anordnung weist folgende Merkmale auf: der Lichtwellenleiter ist auf einem ersten, und das optische Sende- oder Empfangselement auf einem zweiten Träger in durch anisotropes Ätzen hergestellten V-Nuten und Vertiefungen fixiert, wobei sie nicht über die Trägeroberflächen hinausragen; die Träger sind Oberfläche zu Oberfläche aufeinander angeordnet und aufgrund ihrer ebenen Oberflächen aufeinander beweglich; an jedem Träger ist eine Spiegelebene derart angebracht, daß die Spiegelebenen zueinander parallel und übereinander angeordnet sind und daß ein Lichtbündel durch zweimalige Spiegelung vom Sendeelement zum Lichtwellenleiter bzw. vom Lichtwellenleiter zum Empfangselement geleitet wird.

Der Erfindung liegt die Aufgabe zugrunde, eine Anordnung zur Ankopplung eines Lichtwellenleiters an ein optisches Sende- oder Empfangselement anzugeben, die die nötigen Präzisionsanforderungen erfüllt und eine einfache Montage von Bauteilen auf dem Träger ermöglicht.

Die Aufgabe wird gelöst durch eine Anordnung mit den Merkmalen des Patentanspruches 1.

Vorteilhafte Weiterbildungen sind in den Unteransprüchen angegeben.

Bei der Ankopplung von Lichtwellenleitern an optische Sende- oder Empfangselemente müssen viele verschiedene Gesichtspunkte beachtet werden, um einen optimalen Kopplungswirkungsgrad zu erreichen. Der wichtigste ist die Präzision der geometrischen Lage der verschiedenen optischen Komponenten. Beispielsweise besitzen Laserdioden und OEIC Streifenlichtwellenleiter, die sich in ihrer Feldverteilung von der Feldverteilung der Lichtwellenleiter unterscheiden. Zur Erzielung eines hohen Koppelwirkungsgrades muß die Feldverteilung des optoelektronischen Bausteins an die des Lichtwellenleiters angepaßt werden.

Für eine solche Anpassung ist eine optische Abbildung über Linsen, beispielsweise über Kugellinsen oder Gradientenindexlinsen gut geeignet. Typische Werte für die aufeinander anzupassenden Fleckdurchmesser sind 1 - 2 $\mu$m für den optoelektronischen Baustein und 9 - 10 $\mu$m für die Monomodelichtwellenleiter. Die bei der Kopplung zulässigen geometrischen Toleranzen müssen klein gegenüber diesem Fleckdurchmessern sein, das heißt ca. 0,2 μm für den Laser bzw. den OEIC, und ca. 1 μm für den Lichtwellenleiter. Diese strengen geometrischen Toleranzanforderungen können dann wesentlich leichter erfüllt werden, wenn, wie oben bereits angedeutet, an einer Stelle des Abbildungsstrahlenganges eine Justierung durchgeführt werden kann.

Die zur optischen Achse des Abbildungsstrahlenganges axialen Toleranzen sind um eine Größenordnung größer als die lateralen , so daß sie durch die Präzision der Siliziumtechnik gut aufgefangen werden können. Die optischen Komponenten sollten also in axialer Richtung durch Halterungen in Silizium, die durch anisotropes Ätzen hergestellt wurde, fixiert sein.

Um eine Justierung in lateraler Richtung zu ermöglichen, und trotzdem eine kompakte Bauweise beizubehalten ist es sinnvoll, die optischen Elemente auch in lateraler Richtung auf einem durch anisotropes Ätzen geformten Siliziumträger zu fixieren. Dabei werden jedoch der oder die Lichtwellenleiter auf einem ersten Träger und das Sende- oder Empfangselement auf einem zweiten Träger fixiert. Die Oberflächen der Träger stellen parallele Bezugsebenen dar. Die beiden Träger liegen mit ihren Oberflächen aufeinander. Sie können gegeneinander verschoben werden. Im Strahlengang zwischen Lichtwellenleiter und optischem Sende- oder Empfangselement finden zwei Spiegelungen an parallelen Spiegelflächen statt, von denen sich auf jedem Träger eine befindet. Durch Verschieben der Träger gegeneinander findet eine laterale Justierung statt. Dabei ist es besonders vorteilhaft, daß die Länge des Lichtbundels zwischen Lichtwellenleiterstirnfläche und Lichtaustritts- bzw. Lichteintrittsfläche am aktiven optischen Element auch bei Verschiebung der Träger in Richtung der Lichtwellenleiterlängsachse konstant bleibt.

Aus der DE-OS 37 31 311 ist es zwar an sich bekannt, den Strahlengang durch Spiegelung an einer geneigten Ebene aus der Ebene des Siliziumträgers heraus auf eine Empfangsdiode abzubilden, es findet jedoch keine zweimalige Spiegelung statt, und die Umlenkung wird nicht zum Justieren ausgenutzt. Im Gegensatz dazu wird in der DE-OS 37 31 311 davon ausgegangen, daß die Lage der Bauteile durch die Genauigkeit des Silizium-Ätzverfahrens mit ausreichender Genauigkeit festgelegt ist. Genau dies ist jedoch oftmals, wie bereits dargelegt, nicht der Fall.

Die kompakte Bauweise wird dadurch ermöglicht, daß die laterale Justierung durch Verschiebung in einer zu den Oberflächen der Träger parallelen Ebene durchgeführt werden kann.

Da die Auflagefläche der Träger aufeinander beliebig groß gewählt werden kann, ist der Aufbau auch sehr stabil und somit, da die Oberflächen genau hergestellt werden können, ist eine hohe Justiergenauigkeit erreichbar.

Am besten geeignet ist eine Justierung in dem Bereich zwischen Abbildungsoptik und Lichtleitfaser, da hier die Toleranzen wesentlich größer sind als in dem Bereich zwischen Abbildungsoptik und aktivem optischen Bauelement.

Zweckmäßigerweise werden das aktive optische Bauelement und das oder die Abbildungselement/e auf einem gemeinsamen, durch anisotropes Ätzen geformten Siliziumträger plaziert und fixiert. Die dabei auftretenden Toleranzen in lateralen Richtungen können durch laterale Justierung des Lichtwellenleiters kompensiert werden.

Es erweist sich als besonders sinnvoll den Träger mit dem optisch aktiven Element aus einem Substrat und einem Teil mit einer durchgeätzten Vertiefung herzustellen, da so die Montage von Bauteilen auf dem Substrat erleichtert wird.

Anhand der Zeichnungen werden Ausführungsbeispiele der Erfindung beschrieben.

Es zeigen:

Fig. 1     eine erste erfindungsgemäße Anordung der optischen Komponenten mit integrierter Ansteuerschaltung,

Fig. 2     eine weitere Anordnung mit integrierter Ansteuerschaltung,

Fig. 3     einen Wellenlängenduplexer mit auf dem Siliziumträger aufgebrachter Filterschicht,

Fig. 4     einen Wellenlängenduplexer mit Filterglas im Schnitt,

Fig. 5     diesen Wellenlängenduplexer mit Filterglas in einer Draufsicht und

Fig. 6     einen weiteren Wellenlängenduplexer.

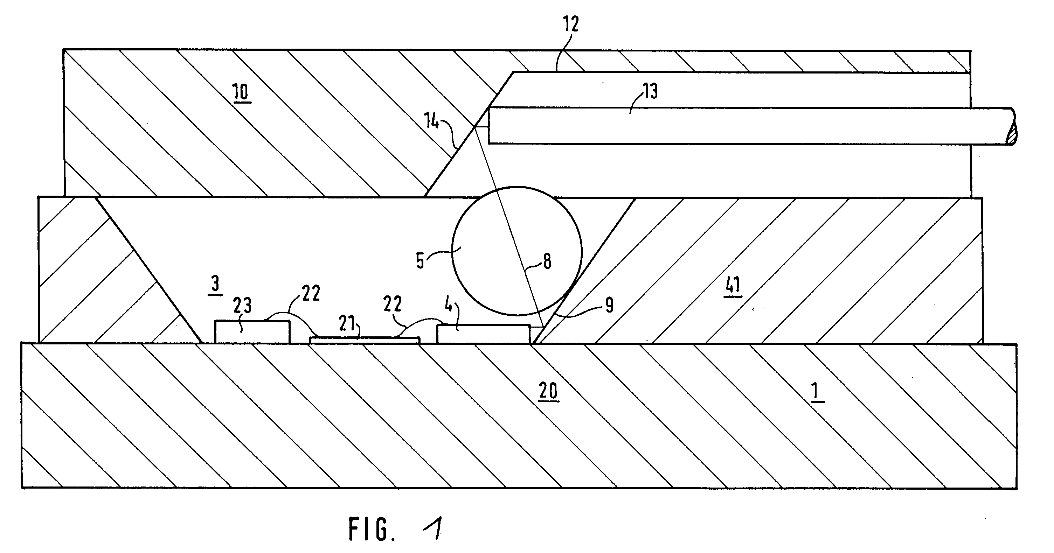

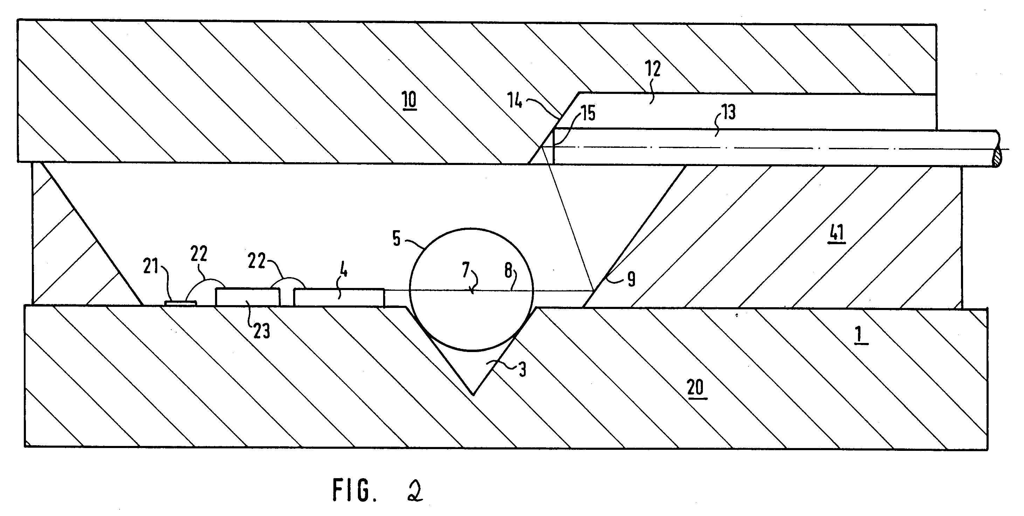

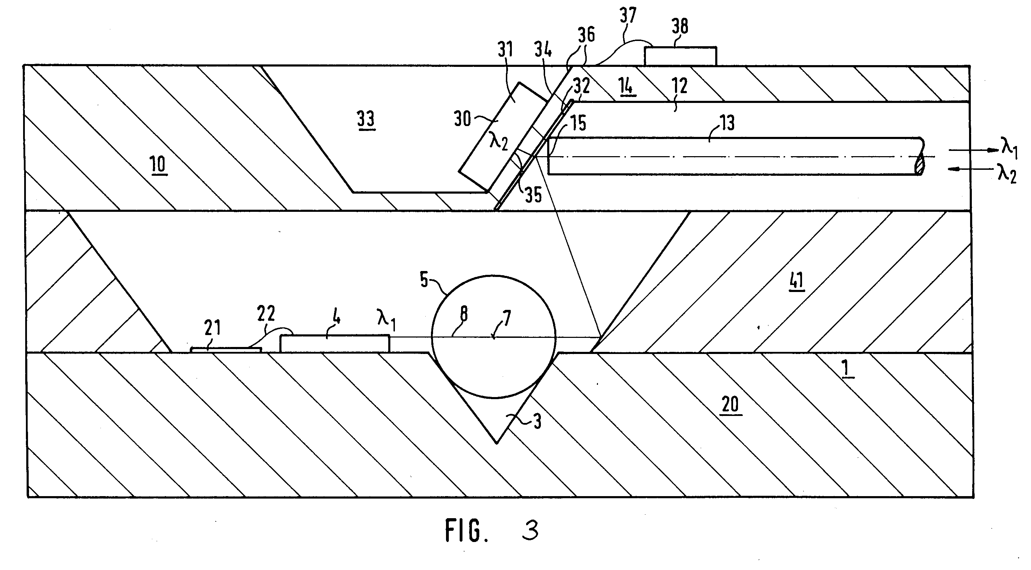

Figur 1 zeigt einen ersten Siliziumträger 1 aus zwei Teilen: In einem ersten Teil ist 41 eine Vertiefung 3 ganz durchgeätzt. Der aktive Baustein 4 ist auf dem zweiten Teil, einem Substrat 20, aufgebracht, das auch elektrische Anschlüsse 21 und Bonddrähte 22 sowie eine Ansteuerschaltung 23 tragen kann. Auf diese Weise kann die Montage und Kontaktierung vor dem Aufbringen des ersten Teils 41 auf das Substrat 20 leichter durchgeführt werden. Danach wird das Substrat 20 mit dem Teil 41 durch Kleben oder Löten entsprechender Metallisierungsschichten miteinander verbunden.

Der aktiver Baustein 4 sitzt auf dem Grund der Vertiefung 3 unterhalb einer Kugellinse 5. Die Kugellinse 5 wird außer von einer Fläche 9 der ersten Spiegelebene noch von den beiden vor und hinter der Zeichenebene schräg verlaufenden (111)-Seitenflächen gehalten. Das horizontal aus dem aktiven Baustein 4 austretende Lichtbündel 8 wird hier vor dem Eintritt in die Kugellinse 5 an der ersten Spiegelebene 9, die auch hier verspiegelt ist, schräg nach oben reflektiert und trifft nach Fokussierung durch die Kugellinse 5 und nach Reflexion an der zweiten Spiegelebene 14 des oberen Siliziumträgers 10 auf die Stirnfläche des Lichtwellenleiters 13, der in einer V-Nut 12 liegt. Durch laterale Verschiebung der beiden Siliziumträger 1 und 10 entlang der gemeinsamen Berührungsfläche 11 kann der Bildpunkt 15 auf den Kern der Faser 13 justiert werden.

Die gegenseitige Positionierung von Laser 4, also dem aktiven Baustein, und Kugellinse 5, läßt sich durch anisotrope Siliziumätztechnik mit einer Genauigkeit von 1 bis 2 μm voreinstellen. Hinzu kommen noch die geometrischen Toleranzen dieser beiden Bauteile selbst und ihrer Befestigung durch Löten, Kleben oder anodisches Bonden, so daß insgesamt mit etwa 4 μm Toleranz in der Positionierung zwischen Lichtaustrittsfläche 6 und Kugelmittelpunkt 7 gerechnet werden muß. Diese Lagetoleranz wäre ohne Justiermöglichkeit der Lichtleitfaser viel zu groß, da der Lichtfleckdurchmesser in der Lichtaustrittsfläche 6 nur etwa 1 bis 2 μm beträgt. Für eine Vorpositionierung mit anschließender Faserjustierung ist diese Lagetoleranz jedoch völlig ausreichend. Das aus dem Laser 4 austretende Lichtbündel 8 wird an einer anisotrop geätzten (111)-Kristallfläche einer ersten Spiegelebene 9 (Neigungswinkel $\alpha$ = arctan $\sqrt{2}$ = 54,74°) des Siliziumträgers 1 reflektiert und unter einem Winkel $\delta$ = 2$\alpha$ - 90° = 19,47° gegen die Senkrechte der Trägeroberfläche 11

nach oben reflektiert. Ein zweiter Siliziumträger 10 liegt auf der Trägeroberfläche 11 des Siliziumträgers 1 auf und ist auf dieser Oberfläche 11 verschiebbar. In den Siliziumträger 10 ist eine V-Nut 12 geätzt, in die ein Lichtwellenleiter 13 eingelegt und fixiert ist. Die Begrenzungsflächen der V-Nut im Träger 10 und die Seitenflächen der Kugelaufnahme 3 im Träger 1 sind (111)-Ebenen mit geringer Ätzrate. Die Siliziumträger haben (100)-Oberflächen.

Die V-Nut 12 schließt vorn mit einer unter dem Winkel $\alpha$ = 54,74° geneigten zweiten Spiegelebene, (111)-Ebene 14 ab. Das Lichtbündel 8 wird an dieser Spiegelebene 14 ein zweites Mal reflektiert und verläuft nun wieder in der ursprünglichen Richtung, da die beiden Spiegelebenen 9 und 14 parallel zueinander sind. Die beiden Spiegelebenen sind zur Erhöhung des Reflexionsvermögens verspiegelt. Dies kann durch eine metallische Spiegelschicht wie z. B. Gold, Silber oder Aluminium, oder eine dielektrische Spiegelschicht erreicht werden.

Durch Verschiebung des Siliziumträgers 10 gegenüber dem Siliziumträger 1 entlang der gemeinsamen Berührungsfläche 11 läßt sich nun der Auftreffpunkt 15 des Lichtbündels 8 auf der Stirnfläche des Lichtwellenleiters 13 sowohl nach vorn und hinten als auch nach oben und unten so justieren, daß der Lichtauftreffpunkt 15 in die Mitte des Lichtwellenleiterkerns des Lichtwellenleiters 13 fällt. Zur Kontrolle der richtigen Justierung wird der Laser 4 in Betrieb genommen und das übergekoppelte Licht gemessen (aktive Justierung).

Eine wichtige Eigenschaft dieses Justiervorschlags ist, daß die Länge des Strahlbündels 8 von Lichtaustrittsfläche 6 über die beiden Reflexionen bis zum Bildpunkt, dem Lichtauftreffpunkt 15, auch bei Verschiebung des Trägers 10 in Richtung der Längsachse der Lichtleitfaser 13 stets gleichbleibt, wie eine einfache geometrische Überlegung zeigt. Dadurch bleibt der Bildpunkt 15 stets auf der Stirnfläche des Lichtwellenleiters, wodurch eine axiale Dejustierung während der lateralen Justierung vermieden wird.

Nach Beendigung der lateralen aktiven Justierung werden die beiden Siliziumträger 1 und 10 zueinander fixiert. Dies kann durch Kleben, anodisches Bonden oder Löten geschehen. Im letzeren Fall müssen in der Berührungsebene 11 lötbare Metallschichten aufgebracht sein.

Im Ausführungsbeispiel nach Figur 1 bilden die beiden Siliziumträger 1 und 10 gleichzeitig ein Gehäuse und einen Gehäusedeckel für den Laser und die Kugellinse.

Ein großer Vorteil für die aktive Justierung ist, daß durch die Präzision der Siliziumätztechnik in Verbindung mit fotolithografisch aufgebrachten Marken die Positionen schon so voreingestellt werden können, daß zumindest eine geringe Lichtüberkopplung schon vor Beginn der aktiven Justierung vorhanden ist. Dadurch wird die aktive Justierung erheblich erleichtert.

Die Bildweite b, d.h. die Länge des abbildenden Strahlenbündels zwischen dem Kugelmittelpunkt 7 und der Stirnfläche des Lichtwellenleiters 13 läßt sich durch die Tiefe der V-Nut 12 einstellen und muß entsprechend der Gegenstandsweite g (Abstand zwischen Lichtaustrittsfläche 6 und Kugelmittelpunkt 7) nach der Linsengleichung gewählt werden, wobei das Vergrößerungsverhältnis M = b/g so gewählt wird, daß der Fleckdurchmesser des aktiven Bausteins und des Lichtwellenleiters aufeinander angepaßt werden.

Im Ausführungsbeispiel nach Figur 2 sitzt der aktive Baustein 4 mit Stromzuführung und Ansteuerschaltung auf einem Silizium-Substrat 20, in das die pyramidenförmige Vertiefung 3 zur Aufnahme der Kugellinse 5 anisotrop geätzt wurde. Die Bildweite 6 läßt sich hier auf einfache Weise durch Verschieben des ersten Teils 41 des Siliziumträgers 1 mit der Reflexionsfläche 9 gegenüber dem Siliziumsubstrat 20 einstellen. Die Justierung des Bildpunktes 15 zum Faserkern der Faser 13 wird wieder, wie oben beschrieben, durchgeführt.

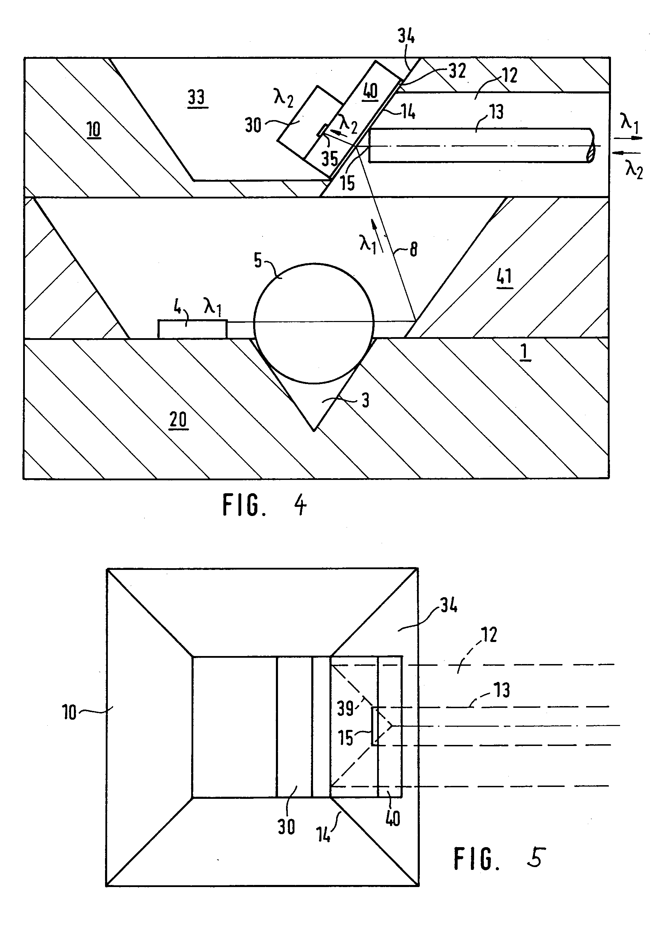

Ein weiterer Vorteil der Erfindung ist, daß auf einfache Weise zusätzlich zu der vereinfachten Justiermöglichkeit auch ein Wellenlängen-Duplexer realisiert werden kann. In Figur 5 ist das Ausführungsbeispiel gemäß Figur 2 dahingehend abgeändert, daß die Reflexionsschicht auf der Fläche 14 durch eine Filterschicht 32 ersetzt worden ist, die die Wellenlänge $\lambda_1$ reflektiert und die Wellenlänge $\lambda_2$ durchläßt. In dem Siliziumkörper 10 wird auf der der V-Nut gegenüberliegenden Seite eine Vertiefung 33 geätzt, an deren einer Seitenfläche 34 eine Empfangsdiode 30 befestigt ist. Da die aktive Fläche 35 der Empfangsdiode 30 sehr nahe an der Stirnfläche des Lichtwellenleiters ist, wird hier keine Fokussierungsoptik benötigt. Dies ist gegenüber anderen Duplexern nach dem Stand der Technik ein Vorteil. Da das empfangene Licht das Silizium zwischen den Flächen 14 und 34 durchdringen muß, muß die Wellenlänge $\lambda_2 > 1,1\mu$m sein. Die elektrischen Anschlüsse der Empfangsdiode führen über Leiterbahnen 36 auf dem Silizium und Bonddrähte 37 zum Verstärkerchip 38.

Im Beispiel gemäß Figur 3 muß die Filterschicht direkt auf das Silizium aufgebracht werden, außerdem besteht eine oben genannte Einschränkung in der Empfangswellenlänge. Einfacher und billiger ist es, Filterschichten auf großflächige Glassubstrate aufzubringen und diese dann in Nutzen von vielen hundert Stück pro Filterscheibe zu zersägen. Im Vorschlag nach Figur 4 ist daher die Siliziumwand zwischen der Fläche 34 der Vertiefung 33 und der Fläche 14 der V-Nut 12 ganz durchgeätzt, so daß ein dreieckiges Loch 39 in der Fläche 34 entsteht. Figur 5 zeigt den oberen Siliziumkörper 10 von oben gesehen. Als Filter wird nun ein Glassubstrat 40 mit einer Filterschicht 32 auf der Wand 34 aufgebracht, so daß die Filterschicht 32 vor dem dreieckigen Loch 39 zu liegen kommt. Die Glasplatte 40 bildet nun an den axialen Anschlag für die Lichtleitfaser 13. Auf der Rückseite des Glassubstrates 40 ist die Empfangsdiode 30 aufgebracht, wobei deren aktive Fläche 35 das durch die Filterschicht 32 dringende Lichtbündel der Wellenlänge $\lambda_2$ empfängt.

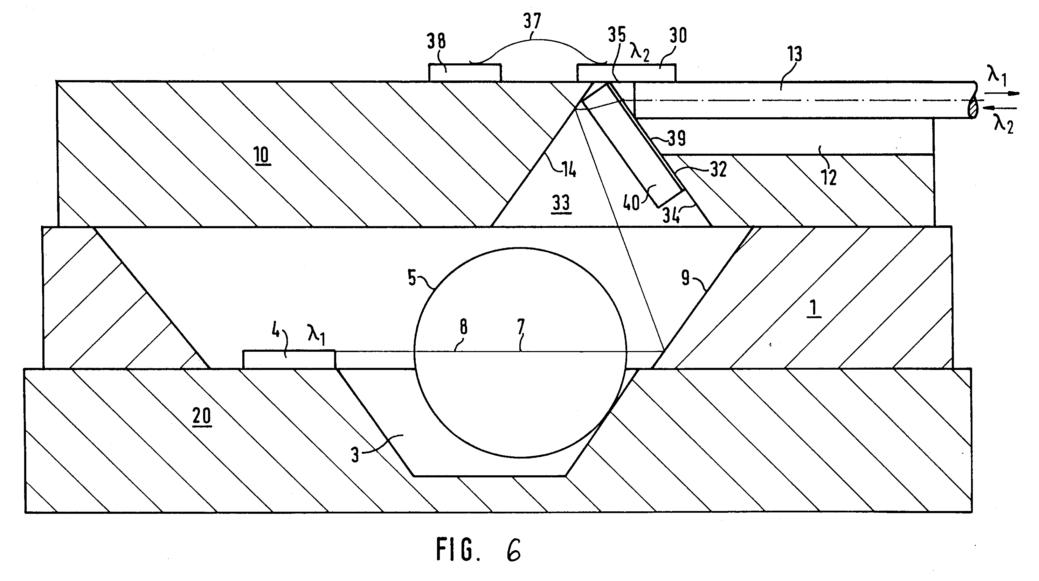

In den Ausführungsbeispielen nach Figur 3 und Figur 4 ist die Empfangsdiode jeweils auf einer schräg liegenden Fläche aufgebracht. Da die Montage auf einer waagerechten Fläche einfacher ist, ist in Figur 6 ein Ausführungsbeispiel gezeigt, bei welchem die Empfangsdiode 30 auf der waagerechten Oberfläche des oberen Siliziumträgers 10 montiert ist. Die Filterschicht 32 ist hier so ausgelegt, daß die empfangene Wellenlänge $\lambda_2$ reflektiert und die Sendewellenlänge $\lambda_1$ durchgelassen wird. Die Spiegelebene 14 sitzt hier an der gegenüberliegenden Wand der Vertiefung 33. Die Vertiefung 33 und die V-Nut 12 sind wieder von gegenüberliegenden Seiten her geätzt worden, wie im Beispiel nach Figur 4, dieses Mal jedoch jeweils von der anderen Seite her.

In allen Duplexerbeispielen ist es von Vorteil, wenn die Rückseite des Filterträgers für die durchgehende Wellenlänge entspiegelt ist.

Ein besonderer Vorteil der erfindungsgemäßen Vorschläge ist, daß der Sende- und Empfangsteil auf separaten Siliziumträgern 1 bzw. 10 aufgebaut werden können, wobei diese Träger auch die dazugehörigen elektronischen Ansteuer- bzw. Verstärkerschaltungen aufnehmen können. Dadurch sind kurze elektrische Verbindungen möglich, was für hohe Bitraten von Wichtigkeit ist.

## Patentansprüche

1. Anordnung zur Ankopplung eines Lichtwellenleiters (13) an ein optisches Sende- oder Empfangselement (4), mit folgenden Merkmalen:
   - der Lichtwellenleiter (13) ist auf einem ersten, und das optische Sende- oder Empfangselement (4) auf einem zweiten Träger (1, 10) fixiert,
   - der Lichtwellenleiter (13) und das optische Sende- oder Empfangselement (4) sind in durch anisotropes Ätzen hergestellten V-Nuten (12) und Vertiefungen (3) fixiert und ragen über die Trägeroberflächen (11) der beiden Träger (1, 10) nicht hinaus,
   - die Träger (1, 10) sind Trägeroberfläche zu Trägeroberfläche (11) aufeinander angeordnet und aufgrund ihrer ebenen Oberflächen aufeinander beweglich,
   - an jedem Träger (1, 10) ist eine Spiegelebene (9, 14) derart angebracht, daß die Spiegelebenen (9, 14) zueinander parallel und übereinander angeordnet sind und daß ein Lichtbündel (8) durch zweimalige Spiegelung vom Sendeelement (4) zum Lichtwellenleiter (13) bzw. vom Lichtwellenleiter (13) zum Empfangselement (4) geleitet wird, dadurch gekennzeichnet, daß sich im Strahlengang zwischen Lichtwellenleiter (13) und Sende- oder Empfangselement (4) eine Linse (5) zur Abbildung befindet und daß der Träger (1) mit dem Sende- oder Empfangselement (4) aus einem Substrat (20) besteht, das eine Schaltung (23) trägt und einem auf dem Substrat (20) aufgebrachten Teil (41) mit einer ganz durchgeätzten Vertiefung (3), wobei das Teil (41) auf der dem zweiten Träger (10) zugewandten Seite des Substrates aufgebracht ist.

2. Anordnung nach Anspruch 1, dadurch gekennzeichnet, daß die Linse (5) sich im Strahlengang zwischen den beiden Spiegelebenen (9, 14) befinden.

3. Anordnung nach einem der Ansprüche 1 oder 2, dadurch gekennzeichnet,
daß der Lichtwellenleiter (13), das optische Sende- oder Empfangselement (4) und die Linse (5) in den durch Ätzen entstandenen Vertiefungen (3) und V-Nuten (12) durch Löten, Kleben oder Bonden befestigt sind.

4. Anordnung nach einem der bisherigen Ansprüche, dadurch gekennzeichnet,
daß die Spiegelebenen (9, 14) mit einer metallischen Schicht, wie Gold, Silber oder Aluminium, oder mit einer dielektrischen Schicht verspiegelt sind.

5. Anordnung nach einem der bisherigen Ansprüche, dadurch gekennzeichnet,
daß die Linse (5) auf dem Substrat (20) oder auf dem Teil (41) fixiert ist.

6. Anordnung nach einem der bisherigen Ansprüche, dadurch gekennzeichnet,
daß die Spiegelebene (14) des Trägers (10) auf dem der Lichtwellenleiter (13) fixiert ist, für mindestens eine Wellenlänge spiegelt und für mindestens eine Wellenlänge durchlässig ist, und daß sich auf dem Träger (10) auf der von dem weiteren Träger (1) abgekehrten Seite, also hinter der Spiegelebene (14), eine Empfangsdiode (30) befindet.

7. Anordnung nach einem der bisherigen Ansprüche, dadurch gekennzeichnet,
daß zwischen den Lichtwellenleiter (13) und der Spiegelebene (14) ein Glassubstrat (4) mit Filterschicht (39) zur Wellenlängenselektion vorgesehen ist, und
daß sich auf dem Träger (10) mit dem Lichtwellenleiter (13) auf der von dem weiteren Träger (1) abgewandten Seite eine Empfangsdiode (30) befindet, die das an der Filterschicht (39) reflektierte Licht empfängt, während das durchgehende Licht zum Empfangselement (4) gelangt.

8. Anordnung nach Anspruch 6, dadurch gekennzeichnet,
daß die Spiegelebene (14) eine auf eine dünne Siliziumschicht aufgebrachte Filterschicht ist.

**Claims**

1. Arrangement, for coupling an optical conductor (13) to an optical transmitting or receiving element (4), with the following features:
   - the optical conductor (13) is fixed on a first carrier (1) and the optical transmitting or receiving element (4) is fixed on a second carrier (10),
   - the optical conductor (13) and the optical transmitting or receiving element (4) are fixed in depressions (3) and V-grooves (12) produced by anistropic etching and do not project beyond the carrier surfaces (11) of both the carriers (1, 10),
   - the carriers (1, 10) are arranged carrier surface to carrier surface (11) one on the other and movable one on the other by reason of their planar surfaces,
   - a respective mirror plane (9, 14) is applied at each of the carriers (1, 10) in such a manner that the mirror planes (9, 14) are arranged one parallelly to and above the other and that a light beam (8) is led by twofold reflection from the transmitting element (4) to the optical conductor (13) or from the optical conductor (13) to the receiving element (4),
   characterised thereby,
   that a lens (5) for imaging is disposed in the ray path between the optical conductor (13) and the transmitting or receiving element (4) and that the carrier (1) with the transmitting or receiving element (4) consists of a substrate (20), which carries a circuit (23) and a part (41), which is applied on the substrate (20), with a depression (3) which is etched through completely, wherein the part (41) is applied onto that side of the substrate which faces the second carrier (10).

2. Arrangement according to claim 1, characterised thereby, that the lens (5) is disposed in the ray path between both the mirror planes (9, 14).

3. Arrangement according to one of the claims 1 and 2, characterised thereby, that the optical conductor (13), the optical transmitting or receiving element (4) and the lens (5) are fastened by soldering, gluing or bonding in the depressions (3) and V-grooves (12) produced by etching.

4. Arrangement according to one of the previous claims, characterised thereby, that the mirror planes (9, 14) are made reflective by a metallic layer, such as gold, silver or aluminium, or by a dielectric layer.

5. Arrangement according to one of the previous claims, characterised thereby, that the lens (5) is fixed on the substrate (20) or on the part (41).

6. Arrangement according to one of the previous claims, characterised thereby, that the mirror plane (14) of the carrier (10), on which the optical conductor (13) is fixed, reflects for at least one wavelength and is translucent for at least one wavelength and that a receiving diode (30) is disposed on the carrier (10) on that side which is remote from the further carrier (1), thus behind the mirror plane (14).

7. Arrangement according to one of the previous claims, characterised thereby, that a glass substrate (4) with a filter layer (39) for wavelength selection is provided between the optical conductor (13) and the mirror plane (14) and that a receiving diode (30), which receives the light reflected at the filter layer (39), whilst the transmitted light gets to the receiving element (4), is disposed on that side of the carrier (10) which is remote from the further carrier (1).

8. Arrangement according to claim 6, characterised thereby, that the mirror plane (14) is a filter layer applied onto a thin silicon layer.

**Revendications**

1. Dispositif pour coupler un guide d'ondes optique ou fibre optique (13) à un élément émetteur ou récepteur optique (4), ayant les particularités suivantes:
   - la fibre optique (13) est fixée sur un premier support (1) et l'élément émetteur ou récepteur optique (4) est fixé sur un second support (10),
   - la fibre optique (13) et l'élément émetteur ou récepteur optique (4) sont fixés dans des rainures en V (12) et des creux (3) réalisés par gravure anisotrope et ne dépassent pas des surfaces de support (11) des deux supports (1, 10),
   - les supports (1, 10) sont superposés surface de support contre surface de support (11) et sont déplaçables l'un sur l'autre en raison de leurs surfaces planes,
   - sur chaque support (1, 10), un plan de réflexion (9, 14) est disposé de manière que les plans de réflexion (9, 14) soient parallèles entre eux et superposés et qu'un faisceau lumineux (8) soit envoyé par deux réflexions de l'élément émetteur (4) vers la fibre optique (13) ou de la fibre optique (13) vers l'élément récepteur (4), caractérisé en ce qu'une lentille (5) pour la reproduction se trouve dans le trajet du faisceau entre la fibre optique (13) et l'élément émetteur ou récepteur (4) et que le support (1) pour l'élément émetteur ou récepteur (4) est constitué d'un substrat (20), portant un circuit (23), et d'une partie de support (41) appliquée sur le substrat (20) et pourvue d'une ouverture traversante formant un creux (3), la partie de support (41) étant appliquée sur le côté du substrat dirigé vers le second support (10).

2. Dispositif selon la revendication 1, caractérisé en ce que la lentille (5) se trouve dans le trajet du faisceau entre les deux plans de réflexion (9, 14).

3. Dispositif selon la revendication 1 ou 2, caractérisé en ce que la fibre optique (13), l'élément émetteur ou récepteur optique (4) et la lentille (5) sont fixés par soudage, collage ou connexion (bonding) dans les creux (3) et les rainures en V (12) créés par gravure.

4. Dispositif selon une des revendications précédentes, caractérisé en ce que les plans de réflexion (9, 14) sont rendus réfléchissants par une couche métallique, d'or, d'argent ou d'aluminium par exemple, ou par une couche diélectrique.

5. Dispositif selon une des revendications précédentes, caractérisé en ce que la lentille (5) est fixée sur le substrat (20) ou sur la partie de support (41).

6. Dispositif selon une des revendications précédentes, caractérisé en ce que le plan de réflexion (14) du support (10) sur lequel est fixée la libre optique (13), est réfléchissant pour au moins une longueur d'onde et transparent pour au moins une longueur d'onde, et en ce qu'une diode de réception (30) se trouve sur le côté du support (10) éloigné de l'autre support (1), donc derrière le plan de réflexion (14).

7. Dispositif selon une des revendications précédentes, caractérisé en ce qu'un substrat de verre (4), portant une couche filtrante (39) pour la sélection de longueur d'onde, est prévu entre la libre optique (13) et le plan de réflexion (14) et que le support (10) pour la libre optique (13) porte, sur le côté éloigné de l'autre support (1), une diode de réception (30) qui reçoit la lumière réfléchie sur la couche filtrante (39), tandis que la lumière qui traverse cette couche, parvient jusqu'à l'élément récepteur (4).

8. Dispositif selon la revendication 6, caractérisé en ce que le plan de réflexion (14) est une couche filtrante appliquée sur une mince cou-

che de silicium.

FIG. 1

FIG. 2

EP 0 395 854 B1

FIG. 3

EP 0 395 854 B1

EP 0 395 854 B1

FIG. 4

FIG. 5

12

FIG. 6

EP 0 395 854 B1